Europäisches Patentamt

European Patent Office

Office européen des brevets

(19)

(11) Veröffentlichungsnummer : **0 250 856 B1**

# EUROPÄISCHE PATENTSCHRIFT

(12)

(45) Veröffentlichungstag der Patentschrift:
**30.01.91 Patentblatt 91/05**

(51) Int. Cl.⁵ : **F04D 13/02, H02K 49/10**

(21) Anmeldenummer : **87107531.3**

(22) Anmeldetag : **23.05.87**

(54) **Kreiselpumpe mit Magnetkupplung.**

(30) Priorität : **04.06.86 CH 2276/86**

(43) Veröffentlichungstag der Anmeldung :
**07.01.88 Patentblatt 88/01**

(45) Bekanntmachung des Hinweises auf die
Patenterteilung :
**30.01.91 Patentblatt 91/05**

(84) Benannte Vertragsstaaten :
**DE FR GB IT NL**

(56) Entgegenhaltungen :
**DE-A- 2 559 042**
**FR-A- 1 384 847**
**US-A- 4 080 112**
**US-A- 4 207 485**

(73) Patentinhaber : **GEBRÜDER SULZER**
**AKTIENGESELLSCHAFT**
**Zürcherstrasse 9**
**CH-8401 Winterthur (CH)**

(72) Erfinder : **Bolleter, Ulrich, Dr.**
**Gotthelfstrasse 29**
**CH-8472 Seuzach (CH)**
Erfinder : **Kläui, Erich**
**Gotthelfstrasse 77**
**CH-8472 Seuzach (CH)**

## Beschreibung

Die Erfindung betrifft eine kreiselpumpe mit Permanentmagnetkupplung. Derartige kreiselpumpen sind beispielsweise unter dem Begriff Spaltrohr-Pumpen bekannt. Bei solchen Pumpen erfolgt der Antrieb z.B. über eine Spaltrohr-Magnetkupplung, deren äusserer Magnettopf über eine Welle von einem Motor angetrieben ist. Bei anderen Pumpen dieser Art, erfolgt der Antrieb direkt mit einem Spaltrohr-Elektromotor, wobei ein Teil der Pumpenrotorgruppe als Rotor und der äussere Teil als Stator des Elektromotors ausgebildet sind. Derartige Pumpen werden mit Vorteil in chemischen Anlagen und überall dort eingesetzt, wo kein Fördermittel mit der Atmosphäre in Verbindung kommen darf, oder wo chemisch aggressive Stoffe gefördert werden.

DE-A-25 59 042 beschreibt eine magnetisch angetriebene kreiselpumpe mit einer Magnetkupplung, bei der antriebsseitig wenigstens zwei und abtriebsseitig wenigstens ein Permanentmagnet verwendet werden. Ein Verbindungsjoch verbindet die zwei Antriebsmagnete mechanisch untereinander und mit der Antriebswelle des Motors. Die Antriebs- und Abtriebs-Permanentmagnete sind einander unmittelbar gegenüberliegend angeordnet. Permanentmagnete sind sowohl im als auch ausserhalb des Pumpenraums angeordnet.

Bei dieser und anderen bekannten Kreiselpumpen ist die eine der Magnetpolgruppen im Pumpenrotorgruppen-Raum, nachfolgend auch kurz Pumpenraum genannt, angeordnet und mit dem Pumpenrotor drehfest verbunden. Diese Magnetgruppe ist vom Fördermittel umspült und muss gegen dieses abgedichtet und geschützt werden. Im Pumpenraum sind die Platzverhältnisse eng und begrenzt und die Uebertragung von grösseren Leistungen und Drehmomenten erfordert, dass die Magnetpolgruppe zur Erzeugung genügend hoher Feldstärken aus hochwertigem, teurem Werkstoff gefertigt werden muss.

Die vorgeschlagene Ausführung bringt hier wesentliche Fortschritte. Sie löst die Aufgabe, eine Kreiselpumpe mit einer Permanentmagnetkupplung zu schaffen, deren Magnetpolgruppen aus kostengünstigem Material und ohne besondere Schutzmassnahmen vom Fördermittel getrennt angeordnet sind. Indem keine der Magnetpolgruppen im Pumpenraum angeordnet ist, entfällt deren kostspielige Ummantelung. Zudem ist damit auch die Möglichkeit geboten, aufgrund der günstigeren Raumverhältnisse, ausserhalb des Pumpenraums, die Magnetpolgruppen bei entsprechender Dimensionierung aus einem kostengünstigeren Werkstoff herzustellen, um die erforderliche Leistung über die Kupplung auf die Pumpe zu übertragen. Ein weiterer Vorteil der Erfindung ist darin zu sehen, dass die Masse der Pumpenrotorgruppe und ihre dem Fördermittel ausgesetzte Oberfläche verringert und damit die Reibungsverluste vermindert werden. Zudem weist eine derartige Pumpenrotorgruppe ein niedrigeres Massenträgheitsmoment und somit ein verbessertes Anlaufverhalten auf.

Erfindungsgemäss ist eine derartige Kreiselpumpe dadurch gekennzeichnet, dass die Magnetpolgruppen ausserhalb des Pumpenradraumes angeordnet sind, dass die Pumpenradraumwand einen ringtaschenförmigen Teil aufweist, der in den Spalt zwischen die Magnetpolschuhe ragt, und dass der Kreis des magnetischen Flusses über den Spalt und einen Teil aus magnetisierbarem Werkstoff der Pumpenrotorgruppe geschlossen ist. Die abhängigen Ansprüche beziehen sich auf vorteilhafte Weiterbildungen der Erfindung. Nachfolgend wird die Erfindung anhand der Ausführungsbeispiele, die in den Zeichnungen dargestellt sind, näher erläutert. Es zeigen :

Fig. 1 schematisch im Schnitt eine erfindungsgemässe Kreiselpumpe mit Permanentmagnetkupplung, bei der der Teil aus magnetisierbarem Werkstoff der Pumpenrotorgruppe topfradähnlich angeordnet ist,

Fig. 2 schematisch im Schnitt einen Ausschnitt einer Kreiselpumpe, bei der der Teil aus magnetisierbarem Werkstoff der Pumpenrotor-Baugruppe radialscheibenartig ausgebildet ist,

Fig. 3 schematisch im Schnitt einen Ausschnitt einer Kreiselpumpe, bei der der Teil aus magnetisierbarem Werkstoff ein ringförmiger Fortsatz des Pumpenrotors ist,

Fig. 4 vergrössert einen Schnitt nach I-I durch den Teil aus magnetisierbarem Werkstoff, den Spalt und die Polschuhringe der Magnetkupplung der Kreiselpumpe von Fig. 3.

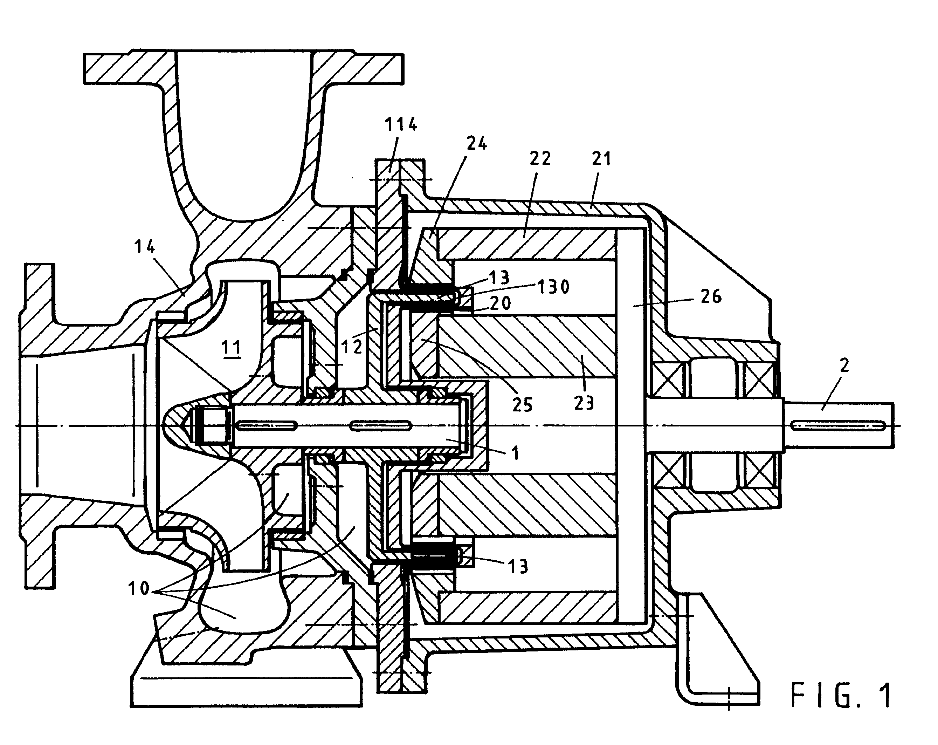

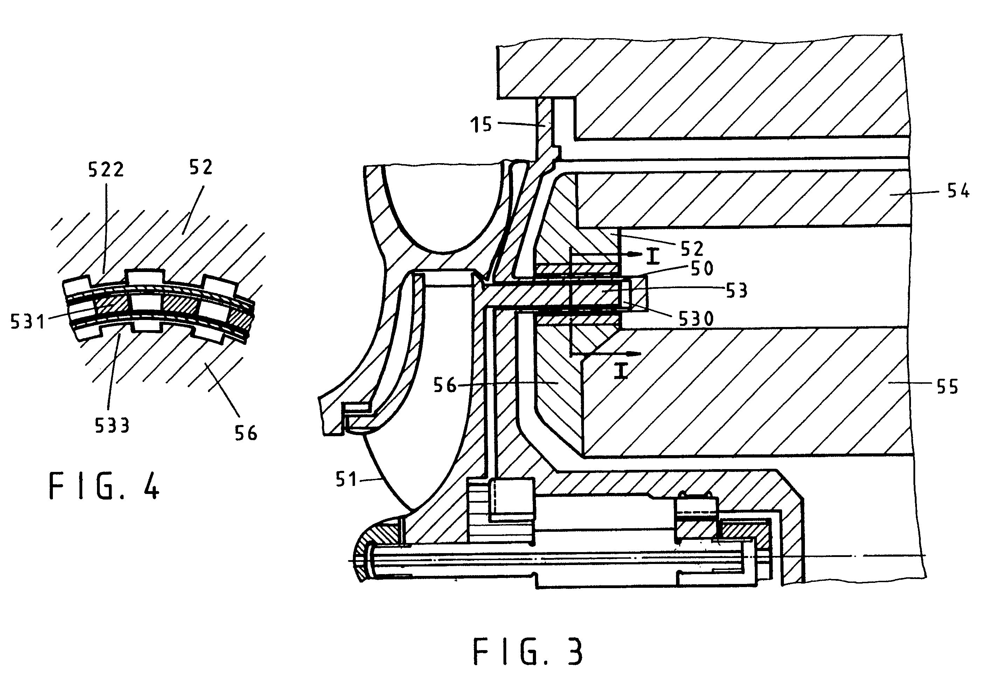

Die stopfbuchsenlose Kreiselpumpe von Fig. 1 zeigt im Pumpenraum 10 eine Pumpenrotorgruppe mit dem Pumpenrad 11 und Topfrad 12 mit Weicheisenteil 13 auf der Rotorwelle 1. Der Weicheisenteil 13 ragt in die U-förmige Tasche 130 des Stirndeckels 114 des Pumpengehäuses 14. Im Magnetkupplungsgehäuse 21, das auf dem Stirndeckel 114 der Pumpe sitzt, ist die von einem nicht gezeichneten Motor angetriebene Antriebswelle 2 mit den Magnetpolgruppen 22, 23 drehbar gelagert. Die Magnetpolgruppen 22, 23 aus permanentmagnetischem Material sind z.B. Rundtopfmagnete oder rundtopfartig angeordnete Magnetstäbe und bilden mit den Polschuhringen 24, 25 den Ringspalt 20, in welchen die ringförmige Tasche 130 des Stirndeckels 114 ragt. Der Stirndeckel 114, ganz besonders im Bereich der Tasche 130, besteht aus einem nicht- oder schwachmagnetisierbaren Werkstoff. Die Polschuhringe 22, 23 bestehen aus einem magnetisierbaren Werkstoff, z.B. aus Weicheisen. Der Kreis des magnetischen Flusses verläuft von den Magnetpolgruppen 23 über die Weicheisenscheibe 26, die Magnetgruppen 22, den Polschuhring 24, den Ringspalt 20, die Tasche 130, den Weicheisenteil 13 und den Polschuhring 24 wieder zu den Magnetgruppen 22. Um eine optimale Leistungsübertragung auf die Pumpenrotorgruppe zu erzielen, sind die Polschuhringe 24, 25 und der Weicheisenteil 13 in bekannter Weise, und wie z.B. in Fig. 4 gezeigt, mit einer Vielzahl sich gegenüberliegenden Polschuhen versehen. Wenn die Pumpe für chemisch aggressive Fördermittel verwendet wird, ist der Weicheisenteil 13 des Topfrades 12 z.B. mit einem chemisch resistenten Material wie etwa rostfreiem Stahl V18/8 korrosionsgeschützt, was in der Zeichnung nur im unteren Teil ersichtlich ist.

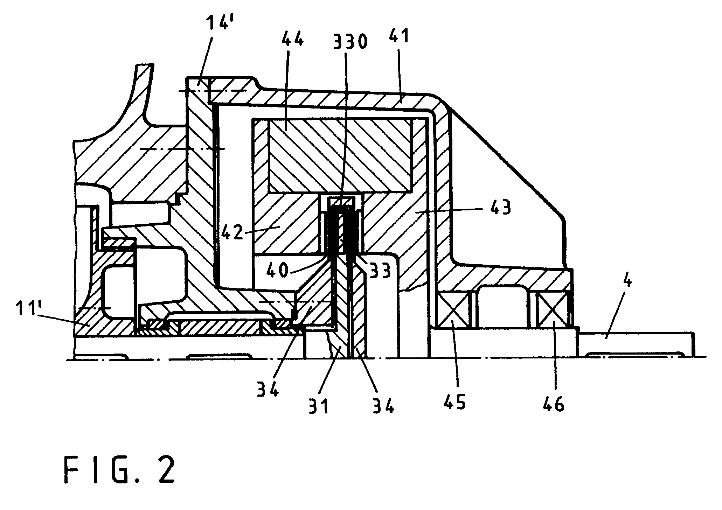

Fig. 2 zeigt Einzelheiten einer Pumpenrotorgruppe mit dem Pumpenrad 11' und einer Scheibe 31, deren äusserer Teil 33 aus magnetisierbarem Material wie z.B. Weicheisen besteht und in die U-förmige Tasche 330 des Stirndeckels 34 des Pumpengehäuses und Pumpenraumes ragt. Die Polschuhringe 42, 43 bilden den Spalt 40, in welchem die U-förmige Tasche 330 mit dem Weicheisenteil 33 der Scheibe 31 angeordnet ist. Der Polschuhring 43 dient hier auch als Scheibe der Magnetpol-Baugruppe und ist mit der Antriebswelle 4 verbunden. Der Magnetring 44 besteht aus einem permanentmagnetisierbaren Material. Hier ist das topfförmige Kupplungsgehäuse 41 mit dem Pumpengehäuseteil 14' verbunden.

Die Antriebswelle 4 ist in den Lagern 45, 46 in Kupplungsgehäuse 41 drehbar gelagert.

Im Beispiel von Fig. 3 ist der ringförmige Weicheisenteil 53 der Pumpenrotorgruppe als Fortsatz direkt am Pumpenrad 51 angebracht. Der Weicheisenteil 53 läuft auch hier in einer U-förmigen Tasche 530 des Stirndeckels 15 des Pumpengehäuses und Pumpenraumes. Der Kreis des magnetischen Flusses läuft hier vom äusseren Magnetring 54 mit Polschuhring 52 über den Spalt 50 mit dem Weicheisenteil 53 zum Polschuhring 56 und Magnetring 55, und von diesem über eine nicht gezeichnete Scheibe zurück zum Magnetring 54. Die Magnetpolgruppe mit den ringförmig angeordneten Elementen ist auf einer hier nicht gezeigten Welle drehbar gelagert und wird von einem Motor angetrieben. Um eine optimale Uebertragung der Leistung auf die Pumpenrotorgruppe zu gewährleisten, sind die Polschuhe und der Weicheisenteil etwa wie in Fig. 4 schematisch gezeigt ausgebildet und angeordnet. Zwischen je einem Polschuhfinger 522 des äusseren Polschuhrings 52 und einem radial gegenüberliegenden Polschuhfinger 533 des inneren Polschuhrings 53, ist ein Weicheisenfinger 531 des Weicheisenteils angeordnet. Die Finger 531 sind ringförmig zum Weicheisenteil 53 angeordnet. Die Polschuhringe 52, 53 können aus Magnetstäben gebildet werden. Bei Pumpen für chemisch aggressive Substanzen ist der Weicheisenteil 53 durch eine widerstandsfähige Schutzblechkonstruktion aus einem nicht oder nur schwach magnetisierbaren Werkstoff, beispielsweise rostfreiem Stahl, geschützt. Es sind aber auch Schutzkonstruktionen aus anderen Materialen wie etwa Kunststoff möglich.

Die in den Zeichnungen schematisch veranschaulichten Ausführungsbeispiele eignen sich beispielsweise für einstufige Pumpen mit Antriebsleistungen im Bereich von etwa 20 bis 80 kW, wo wirtschaftlich besonders vorteilhafte Ergebnisse erzielt werden können. Als permanentmagnetische Werkstoffe für die Magnete eignen sich beispielsweise Alnico-Legierungen, Ferrite, intermetallische, permanentmagnetische Verbindungen von Seltenen Erden und Kobalt, aber auch jedes andere permanentmagnetische Material. Bestimmend für die Wahl des Materials sind weitgehend die räumlichen Verhältnisse und die Grösse der mit der Magnetkupplung zu übertragenden Leistung.

## Ansprüche

1. Kreiselpumpe mit Permanentmagnetkupplung, dadurch gekennzeichnet, dass die Magnetpolgruppen (22, 23, 24, 25, 26 ; 42, 43, 44 ; 52, 54, 55, 56) ausschliesslich ausserhalb des Pumpenradraumes (10) angeordnet sind, dass die Pumpenraumwand einen ringtaschenförmigen Teil (130 ; 330 ; 530) aus nicht- oder nur schwach magnetisierbarem Material aufweist, der in den Spalt (20, 40, 50) zwischen die Magnetpolschuhe (24, 25 ; 42, 43 ; 52, 56) ragt, und dass der Kreis des magnetischen Flusses über den Spalt (20 ; 40 ; 50) und einen Teil (13 ; 33 ; 53 ; 531) aus magnetisierbarem Werkstoff der Pumpenrotorgruppe (1, 11, 12, 13 ; 11', 31, 33 ; 51, 53) geschlossen ist.

2. Kreiselpumpe nach Anspruch 1, dadurch gekennzeichnet, dass der Teil aus magnetisierbarem Werkstoff der Rotorbaugruppe eine Teil (13) der ringartigen Wand eines topfradähnlichen Elementes (12) der Rotorbaugruppe ist.

3. Kreiselpumpe nach Anspruch 1, dadurch gekennzeichnet, dass der Teil (33) aus magnetisierbarem Werkstoff der Rotorbaugruppe im Spalt radialscheibenartig ausgebildet ist.

4. Kreiselpumpe nach Anspruch 1, dadurch gekennzeichnet, dass der Teil (53) aus magnetisierbarem Werkstoff der Rotorbaugruppe ein ringförmiger Fortsatz des Pumpenrades (51) ist.

5. Kreiselpumpe nach einem der Ansprüche 1 bis 4, dadurch gekennzeichnet, dass der Teil (13, 33, 53) aus magnetisierbarem Werkstoff der Rotorbaugruppe mit einem korrosionsfesten nicht- oder schwachmagnetisierbaren Material korrosionsgeschützt ummantelt ist.

6. Kreiselpumpe nach einem der Ansprüche 1 bis 5, dadurch gekennzeichnet, dass der Teil (13, 33, 53) aus magnetisierbarem Werkstoff der Rotorbaugruppe aus Weicheisen besteht.

7. Kreiselpumpe nach einem der Ansprüche 1 bis 6, dadurch gekennzeichnet, dass der permanentmagnetische Teil (22, 23 ; 44 ; 54, 55) der Magnetpol-Baugruppen aus einzelnen Magnetstäben gebildet ist.

## Claims

1. A centrifugal pump with a permanent magnet coupling, characterised in that the magnetic pole units (22, 23, 24, 25 ; 42, 43, 44 ; 52, 54, 55, 56) are disposed only outside the impeller chamber (10) ; the pump chamber wall has a part (130 ; 530 ; 330) in the form of an annular pocket projecting into the gap (20, 40, 50) between the magnetic pole shoes (24, 25 ; 42, 43 ; 52, 56) ; and the magnetic flux circuit is closed via the gap (20 ; 40 ; 50) and a part (13 ; 33 ; 53 ; 531) consisting of magnetizable material of the pump rotor unit (1, 11, 12, 13 ; 11', 31, 33 ; 51, 53).

2. A centrifugal pump according to claim 1, characterised in that the magnetizable material part of the rotor unit is a part (13) of the ring-like wall of a rotor unit element (12) similar to a cup wheel.

3. A centrifugal pump according to claim 1, characterised in that the magnetizable material part (33) of the rotor unit is constructed in the form of a radial disc in the gap.

4. A centrifugal pmp according to claim 1, characterised in that the magnetizable material part (53) of the rotor unit is an annular extension of the impeller (51).

5. A centrifugal pump according to any one of claims 1 to 4, characterised in that the magnetizable material part (13, 33, 53) of the rotor unit is covered by a corrosion-resistant non-magnetizable or weakly-magnetizable material in order to protect it from corrosion.

6. A centrifugal pump according to any one of claims 1 to 5, characterised in that the magnetizable material part (13, 33, 53) of the rotor unit consists of soft iron.

7. A centrifugal pump according to any one of claims 1 to 6, characterised in that the permanent magnet part (22, 23 ; 44 ; 54, 55 of the magnetic pole units is formed from individual bar magnets.

## Revendications

1. Pompe centrifuge avec accouplement à aimant permanent, caractérisée en ce que les groupes de pôles magnétiques (22, 23, 24, 25, 26 ; 42, 43, 44 ; 52, 54, 55, 56) sont disposés exclusivement à l'extérieur de l'enceinte (10) de la roue de pompe, en ce que la paroi d'enceinte de pompe présente une partie (130 ; 330 ; 530) en forme de poche annulaire, réalisée dans un matériau non magnétisable ou faiblement magnétisable qui s'engage dans la fente (20, 40, 50) comprise entre les pièces polaires magnétiques (24, 25 ; 42, 43 ; 52, 56) et en ce que le cercle du flux magnétique est fermé sur la fente (20 ; 40 ; 50) et une partie (13 ; 33 ; 53 ; 531) en matériau magnétisable du groupe (1, 11, 12, 13 ; 11', 31, 33 ; 51, 53) constituant le rotor de pompe.

2. Pompe centrifuge selon la revendication 1, caractérisée en ce que la partie en matériau magnétisable du groupe de rotor est une partie (13) de la paroi en anneau d'un élément (12), semblable à une roue en pot, du groupe de rotor.

3. Pompe centrifuge selon la revendication 1, caractérisée en ce que la partie (33), en matériau magnétisable, du groupe de rotor, est réalisée en forme de disque radial dans la fente.

4. Pompe centrifuge selon la revendication 1, caractérisée en ce que la partie (53), en matériau magnétisable, du groupe constituant le rotor est un prolongement annulaire de la roue de pompe (51).

5. Pompe centrifuge selon l'une des revendications 1 à 4, caractérisée en ce que la partie (13, 33, 53), en matériau magnétisable du groupe constituant le rotor est enveloppée, en guise de protection contre la corrosion, d'un matériau non magnétisable ou faiblement magnétisable, résistant à la corrosion.

6. Pompe centrifuge selon l'une des revendications 1 à 5, caractérisée en ce que la partie (13, 33, 53), en matériau magnétisable, du groupe de rotor, est en fer doux.

7. Pompe centrifuge selon l'une des revendications 1 à 6, caractérisée en ce que la partie à magnétisme permanente (22, 23 ; 44 ; 54, 55) des groupes de pôles magnétiques est formée par des barreaux magnétiques individuels.

FIG. 1

EP 0 250 856 B1

FIG. 2

EP 0 250 856 B1

FIG. 4

FIG. 3